Europäisches Patentamt

European Patent Office

Office européen des brevets

(11) Publication number: **0 514 862 A1**

# EUROPEAN PATENT APPLICATION

(21) Application number: **92108506.4**

(22) Date of filing: **20.05.92**

(51) Int. Cl.5: **H02G 3/04**

(30) Priority: **22.05.91 IT MI910452 U**

(43) Date of publication of application:
**25.11.92 Bulletin 92/48**

(84) Designated Contracting States:
**AT BE CH DE ES FR GB LI LU NL**

(71) Applicant: **ABB ELETTROCONDUTTURE S.p.A.**
**Via dei Valtorta 43/45**
**I-20127 Milano(IT)**

(72) Inventor: **Previdi, Ermanno**
**Via Soperga 28**
**I-20127 Milano(IT)**
Inventor: **Rienzi, Francesco**
**Via Stampa 4/a**
**I-20123 Milano(IT)**

(74) Representative: **Modiano, Guido et al**
**c/o Modiano & Associati S.r.l. Via Meravigli,**
**16**
**I-20123 Milano(IT)**

(54) **Electrical distribution column particularly for floating floors and the like.**

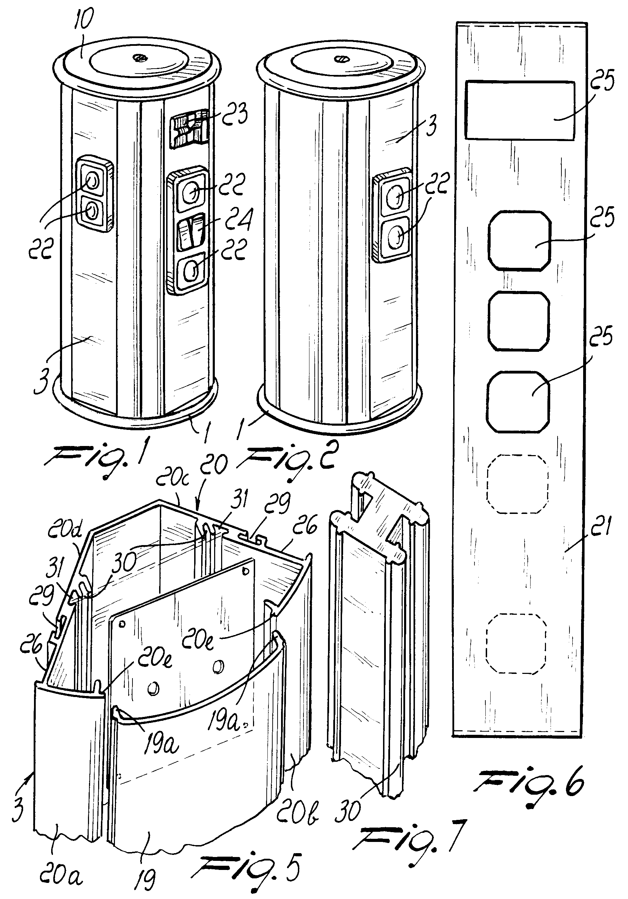

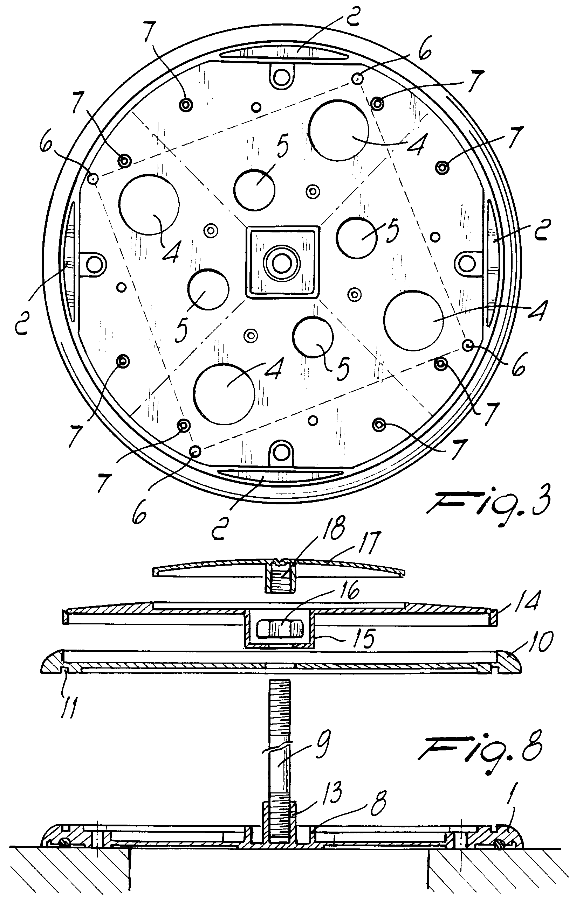

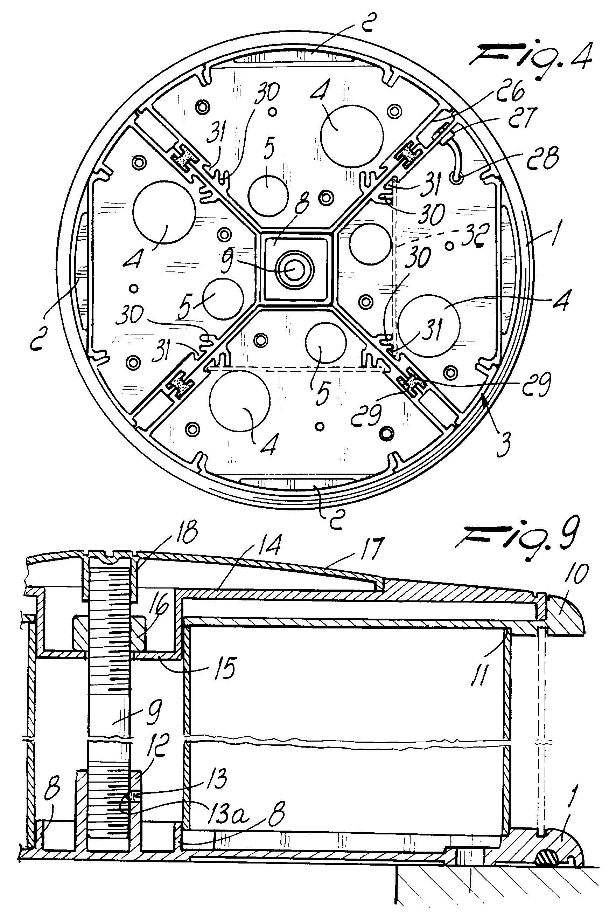

(57) Electrical distribution column particularly for floating floors and the like, which comprises a base (Figure 4) which can be fixed on a floor and which defines a plurality of seats for accommodating a plurality of modular troughs (3) which rise vertically from the base. An at least partially threaded central rod (9) furthermore rises from the base for fixing means (10,17) for covering and closing the column. Means for distributing, shunting and switching motive power and/or data are provided on lateral surfaces of the modular troughs. The base is provided with first holes (4) for the passage of electrical supply cables and second holes (5) for the passage of data transmission and/or telephone cables. The troughs (3) are dividable, between the first holes and second holes, by means of a partition (32).

Fig.4

The present invention relates to an electrical distribution column particularly for floating or raised floors and the like.

In the field of the distribution of electric power and of data transmission inside buildings for civil use, and in particular in offices and the like, distribution columns have been used so far as an alternative to the well-known wall sockets.

However, distribution columns, despite functionally performing the task assigned thereto, have various flaws from the structural point of view. First of all, usually they are not used for data transmission, since the data transmission cables, if used, would be practically in contact with the electrical supply cables: that is to say, the data transmission cables would be immersed in regions with intense electromagnetic fields which are extremely disruptive for data transmission.

Secondly, known columns usually are not very high and measure approximately 20 centimeters or slightly more, and therefore the replacement or execution of connections in a simple manner is usually difficult.

Furthermore, indeed due to their height, they are potentially dangerous and can be the cause of accidents inside the office or in the rooms in which they are placed.

Finally, in the case of floating floors of the type currently used for example in data processing centers or in similar offices, known columns are scarcely suitable, since they are rather heavy, as they are almost entirely made of metallic material, and are difficult to move if the office changes its purpose or is restored.

The aim of the present invention is to eliminate or substantially reduce the problems described above in known types by providing an electrical distribution column particularly for floating floors and the like which allows the simultaneous distribution of electric power combined with data transmission for any kind of medium.

Within the scope of the described aim, an object of the present invention is to provide an electrical distribution column which easily allows to provide electrical or data connections and which furthermore allows to rapidly change the configuration of the connections provided on said column.

Another object of the present invention is to provide an electrical distribution column which has dimensions which considerably reduce the danger of accidents.

Not least object of the present invention is to provide an electrical distribution column particularly for floating floors and the like which is relatively easy and inexpensive to build.

This aim, the objects mentioned and others which will become apparent hereinafter are achieved by an electrical distribution column particularly for floating or raised floors and the like, according to the invention, as defined in the appended claims.

Further characteristics and advantages of the invention will become apparent from the description of an electrical distribution column particularly for floating floors and the like, illustrated only by way of non-limitative example in the accompanying drawings, wherein:

figure 1 is a perspective view of a column according to the invention;

figure 2 is another perspective view of the column according to the invention;

figure 3 is a plan view of a base of the column;

figure 4 is a plan view of the column with troughs and central bar;

figure 5 is a perspective view of a disassembled trough;

figure 6 is a front view of a front portion of the trough;

figure 7 is a perspective view of a trough linking element;

figure 8 is a partially sectional front elevation view of a step of the assembly of the column; and

figure 9 is a partial sectional front elevation view of the assembled column.

With reference to the described figures, the electrical distribution column comprises a base 1 which can be fixed on a floor and which defines a plurality of seats for accommodating a plurality of modular troughs 3 which rise vertically from said base. Each accommodation seat is defined by a raised portion 2 on which a front part of each trough 3 engages. The base 1 furthermore comprises a plurality of first holes 4 for the passage of the electrical supply cables and a plurality of second holes 5 for the passage of data transmission and/or telephone cables.

A plurality of third holes 6 is furthermore provided on the base 1 in order to define the portion of floating floor to be removed in order to install the column on the floor. A plurality of fourth holes 7 is used to accommodate means, such as screws and the like, for fixing the base and column to said floor.

The base 1 is centrally provided with a polygonal raised portion 8 on which the rear parts of the troughs 3 rest. An at least partially threaded central rod 9 for fixing means for covering and closing the column rises from the raised portion 8 coaxially to the base 1 Said rod 9 is secured within a stub 12 which rises from the inside of the raised portion 8 and is internally threaded. The rod 9 is furthermore locked by means of a possible locking dowel 13 which is inserted within a seat 13a defined in the wall of said stub 12. The closure means comprise a plate 10 for the upward closure of the troughs 3: said plate 10 defines a plurality of seats 11 for the troughs 3. A disk 14 is inserted above the plate 10 and is provided with a central region 15 which is depressed and perforated so as to accommodate a nut 16 for coupling to the rod 9.

The covering means comprise an inverted bowl 17 which is centrally provided with a threaded element 18 for coupling to a thread of the rod 9. The plate 10, the disk 14 and the bowl 17 constitute a convex top of the column which prevents the placement of anything on the column itself.

Means for distributing, shunting and switching motive power and/or data are furthermore provided on lateral surfaces of the modular troughs 3.

Each modular trough 3 has a front portion 19 which can be inserted on a rear portion 20 thereof; the front portion has a transverse cross-section shaped like a circular sector. The front portion 19 joins adjacent portions 20a and 20b of the rear portion 20, constituting a substantially continuous external surface, as more clearly illustrated in figures 1 and 2. The front portion 19 has teeth 19a for engaging ridges 20e of the portions 20a and 20b.

The front portion 19 can be replaced with a front panel 21 which performs the same functions as the front panel 19 and which comprises means for distributing, shunting and switching motive power and/or data, such as power sockets 22, breakers 23, switches 24 and the like. The front panel 21 is provided with a plurality of shaped accommodation holes 25 which may have different shapes according to the different type of means to be installed, in order to be able to perform a rapid installation of said means.

Each rear portion 20 comprises, in addition to the portions 20a and 20b, lateral walls 20c and 20d. Each lateral wall 20c or 20d is provided, on its outer face which is adjacent to the joint with a respective portion 20b or 20a, with a depression 26 inside which the ground cable can be inserted; said ground cable can be connected to the above described distribution means by means of a simple rivet 27 and an electric cable 28. The depressions 26 are executed so as to avoid unwanted thicknesses between the troughs 3 and also to minimize the number of ground cables.

Adjacent to the respective depressions 26, each lateral wall 20c or 20d has a groove-like seat 29 which, when coupled to a respective groove 29 of an adjacent trough, as shown in figure 4, constitutes a duct for accommodating a connecting element 30, illustrated in figure 7. The troughs can thus be pre-assembled together before being arranged on the base 1, in order to reduce installation time.

A seat 30 is provided on the inner face of each lateral wall 20c or 20d and is adjacent to a respective recess 31. A partition 32 advantageously engages in said seat 30 and in the recess 31 and, as more clearly shown in figure 4, divides the trough into two chambers: the front chamber, which can be dedicated to supply cables, and the rear chamber, where telephone or data transmission cables, such as cables for connection between computers and the like, can pass.

The partition 32 can be of the type with omega-shaped elements so as to make the installation of each of the above described media even quicker.

Advantageously, the column according to the invention can have a height so as to render it easily visible in offices and the like, and furthermore the inverted bowl 17 conveniently constitutes an upper curved covering which prevents placement thereon any object which might cause damage or short circuits to the electrical devices contained in the column.

It has thus been observed that the invention achieves the intended aim and objects and constitutes an element for distributing electric power and/or data in enclosed spaces which is easy to install and assemble and is just as easy in case of changes to the configuration of the distribution media used. Furthermore, it is particularly easy to replace the lateral portion 19 with the front panel 21, in order to change a configuration for closing an open space into a configuration with switches 24, sockets 22 and safety breakers 23.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Electrical distribution column particularly for floating or raised floors and the like, characterized in that it comprises: a base (1) which can be fixed on a floor and which defines a plurality of seats for accommodating a plurality of modular troughs (3) which rise vertically from said base; an at least partially threaded central rod (9) rising from said base for fixing means (10,17) for covering and closing said column; and means (22-24) for distributing, shunting and switching motive power and/or data which are provided on lateral surfaces (19,21) of said modular troughs.

2. Column according to claim 1, characterized in that each modular trough has a front portion (19) which can be inserted in a rear portion (20) thereof, said front portion having a transverse cross-section shaped like a circular sector.

3. Column according to the preceding claims, characterized in that said front portion is suitable for connecting adjacent portions (20a,20b) of said rear portion, to thereby constitute a substantially continuous outer surface.

4. Column according to claims 1 and 2, characterized in that said front portion is suitable for connecting adjacent portions of said rear portion and comprises said means for distributing, shunting and switching motive power and/or data.

5. Column according to one or more of the preceding claims, characterized in that said closure means comprise a plate (10) for the upper closure of said troughs, said plate defining a plurality of seats (11) for said troughs, said plurality being equal to the plurality defined by said base and coupling to said central rod by means of a thread.

6. Column according to one or more of the preceding claims, characterized in that said covering means comprise an inverted bowl (17) which is centrally provided with a threaded nut (16) for coupling to a thread of said central rod, said plate and said bowl constituting a convex top of said column.

7. Column according to one or more of the preceding claims, characterized in that said base comprises a plurality of first holes (4) for the passage of electrical supply cables and a plurality of second holes (5) for the passage of data transmission and/or telephone cables, said troughs (3) being dividable by means of a partition (32) between said first holes and said second holes.

*Fig.1*

*Fig.2*

*Fig.5*

*Fig.7*

*Fig.6*

Fig.3

Fig.8

Fig. 4

Fig. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-U-8 815 787 (NIEDAX GMBH) | 1 | H02G3/04 |
| A | * page 6, paragraph 3; figure 7 * | 2-4 | |
| | --- | | |
| Y | CH-A-389 053 (ALUMINIUM AG MENZIKEN) | 1 | |
| A | * page 2, line 53 - page 2, line 69; figure 2 * | 5 | |
| | ----- | | |

TECHNICAL FIELDS SEARCHED (Int. Cl.5)

H02G

The present search report has been drawn up for all claims

| Place of search | Date of completion of the search | Examiner |
|---|---|---|
| THE HAGUE | 14 AUGUST 1992 | BOLOER G. |